**Europäisches Patentamt**

(19) **European Patent Office**

**Office européen des brevets**

(11) Publication number: **0 144 623**
**B1**

(12) **EUROPEAN PATENT SPECIFICATION**

(45) Date of publication of patent specification: **28.12.88**

(21) Application number: **84112168.4**

(22) Date of filing: **11.10.84**

(51) Int. Cl.⁴: **B 65 B 9/04**

(54) **Machine for making a double strip enclosing packets of ground coffee.**

(30) Priority: **18.10.83 IT 2334583**

(43) Date of publication of application:
**19.06.85 Bulletin 85/25**

(45) Publication of the grant of the patent:
**28.12.88 Bulletin 88/52**

(84) Designated Contracting States:
**CH DE FR GB LI NL SE**

(56) References cited:
**AU-B- 439 989**
**US-A-3 186 141**

(73) Proprietor: **ILLYCAFFE S.p.A.**
**Via Flavia, 110**
**I-34147 Trieste (IT)**

(72) Inventor: **Illy, Ernesto**
**110, Via Flavia**
**I-34147 Trieste (IT)**

(74) Representative: **Ferraiolo, Ruggero**
**Via Napo Torriani, 10**
**I-20124 Milano (IT)**

Courier Press, Leamington Spa, England.

## Description

The invention concerns a machine for making a double strip in which packets of ground coffee are spaced at intervals.

The U.S. Patents Nos. 3,186,137 and 3,293,042 to Eitzen and the U.S. Patent No. 3,186,139 to Claus cover certain apparatuses for making continuous strips enclosing batches of ground coffee. The first two patents are issued for an apparatus comprising two independent closed chains moveable in vertical planes, each chain comprising a number of plates serving as supports for depositing metered batches of ground coffee onto a lower web of water-permeable material; said batches are then compressed to form compact coffee pads over and around which an upper layer of water-permeable web is bonded to the lower web so that the compacted coffee pad becomes tightly enclosed within the two webs, the process continuing until a strip is formed in which flat disc-shaped packets of ground coffee are spaced at regular intervals. The apparatus comprises means for feeding in the lower web, the ground coffee and the upper web. The third patent concerns an apparatus comprising a closed-link chain moving in a horizontal plane each link of which consists of two plates joined by a hinge, the lower plate containing an impression, substantially corresponding to the lower half of a batch of ground coffee, and an upper plate having an opening opposite said impression for passage of means for forming a complete packet, each lower plate being hinged to the two adjacent lower plates along two transversal edges; each pair of plates serves as a base for forming a packet when said pair of plates reaches the first series of stations on a first straight path of the chain and the second series of stations along a second straight path of the chain. Means are provided for feeding in the lower web, the ground coffee and the upper web; each set of stations includes one at which an impression is formed for the coffee in the lower web, another station at which a batch of coffee is deposited in said impression, another at which the batch is flattened, another at which the flattened batch is compressed to form a compacted coffee pad, another at which the upper web is bonded to the lower web around the compacted pad, and another at which the completed strip is perforated along its edges.

Drawbacks to the apparatus according to the first two patent references are that there is too much variation in the sizes and weights of the coffee packets, and that the row of coffee packets in a strip are not equally compacted.

Drawbacks to the apparatus according to the third patent US—A—3,186,139, from which Claim 1 starts, reference are: the ground coffee to make each packet is not accurately metered, the upper surface of the strip is contaminated by coffee particles adhering to the tools that compact the pads, the apparatus is too bulky while its output is relatively low since the stations on the two straight paths cannot operate simultaneously as those on one path must remain idle while plates are cleaned, inaccurate operation due to undesirable movements caused by the centre of a carrier being connected to means for transmitting a reciprocating movement and being guided solely by four rods passing through holes at its ends.

According to the invention the machine with the characterizing features of Claim 1 is intended to remedy these drawbacks. It solves the problem of producing a double strip of permeable material in which packets of ground coffee are incorporated, spaced at intervals, so that said strip may be used in an automatic coffee machine or each single coffee packet may be used in a coffee machine adapted to be fed by single coffee packets.

The advantages of the machine constructed according to the invention are mainly that the machine has compact size, provides for accurate size and weight of the coffee pockets as well as for continuity and precision of production due to the machine's automatic cleaning devices.

The invention will now be described making reference to the accompanying drawings, which however show only one embodiment of the invention, wherein:

Fig. 1 is a diagrammatic layout of the main parts of the machine,

Fig. 2 is a partial view of two plates forming the conveyor,

Fig. 3 shows the positions of the main parts of the machine,

Fig. 4 is a drawing of the presser at the final compacting station,

Fig. 5 is a partial cross section V—V in Fig. 4,

Fig. 6 is a drawing of the ground coffee reservoir associated to a volumetric batcher,

Fig. 7 is a plan view of the metering device,

Fig. 8 is a drawing of the duct through which coffee is deposited in a pocket,

Fig. 9 is a drawing of the bonding station for forming coffee packets,

Fig. 10 is a view of the means for cleaning off loose coffee particles.

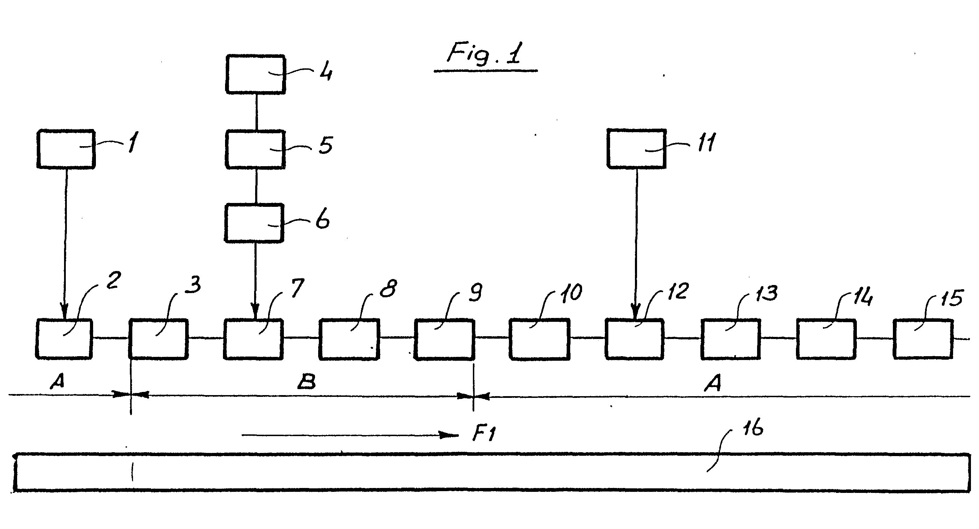

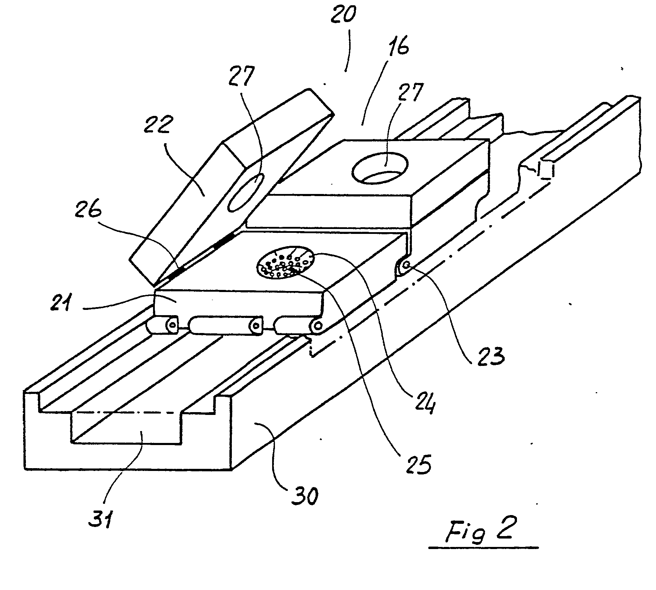

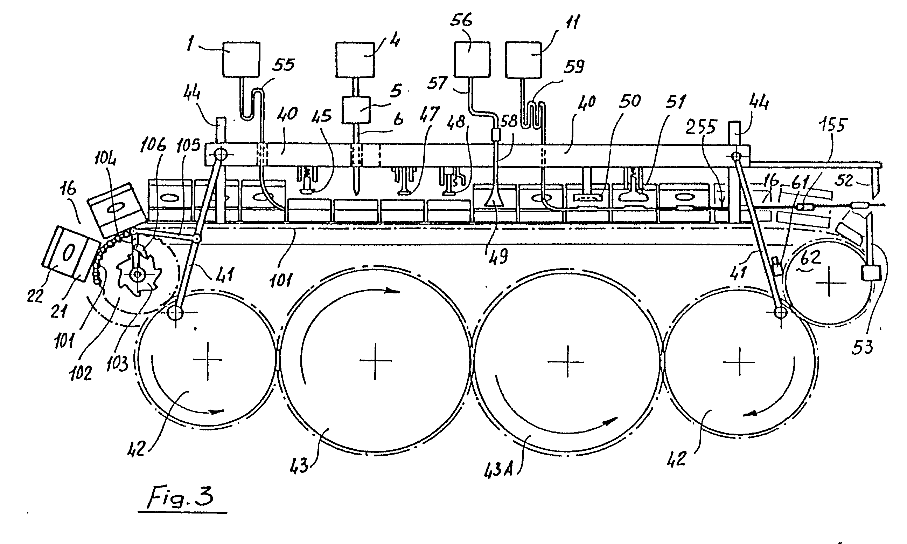

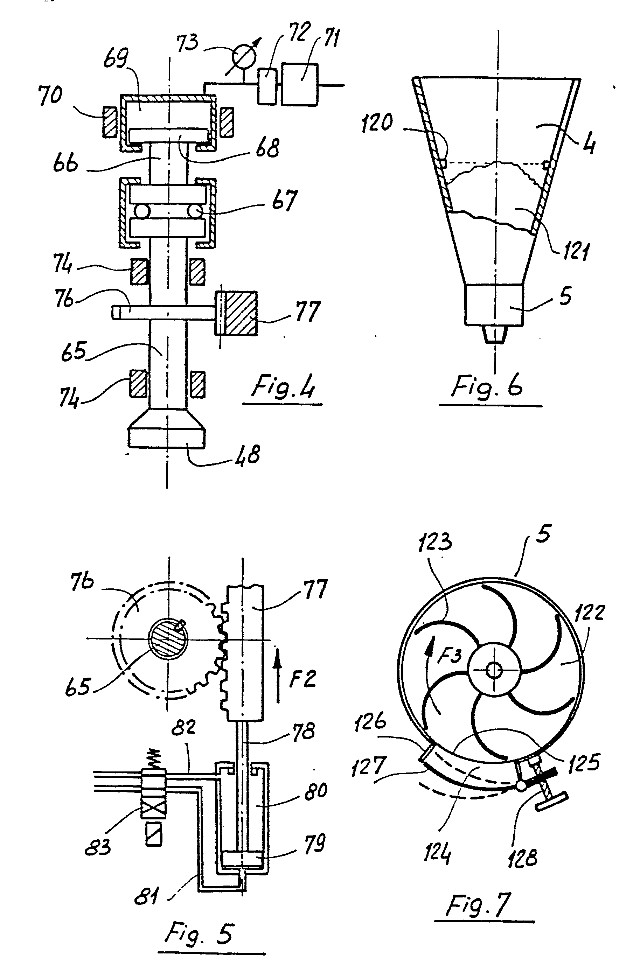

Fig. 1 indicates a means 1 holding a roll of water-permeable material for forming a lower web, and a device for paying out said web; a position 2 where the lower web is laid on the lower of a pair of plates in the conveyor 16; a station 3 at which a pocket is formed in the lower web for receiving a batch of ground coffee shaped to form a circular pad; a reservoir 4 holding ground coffee; a volumetric batching device 5 for metering a batch of ground coffee; a duct 6 through which the batch of ground coffee falls into said pocket; a preliminary compressing station 8 for flattening a batch of ground coffee; a final compacting station 9 for the previously pressed batch of coffee; a suction station 10 for cleaning off coffee particles remaining on the coffee pad and on the lower web around it; a means 11 holding a roll of water-permeable material for forming an upper web and a device for paying it out; a position 12 at which the upper web is laid over a lower plate and over a coffee pad formed in the lower web; a bonding station 13 where the upper web is pressed over that part of the coffee pad emerging above the surface of the lower plate and is bonded to the surrounding lower web to form a coffee packet 155 in a strip 255; a station 14 where the shape of the coffee packet is monitored and where information is encoded onto the strip formed by the bonded webs; a station 15 where the completed strip is cut into lengths each length containing a certain number of coffee packets; an endless conveyor chain 16 consisting of paired plates moving in a vertical plane, the upper chain moving in the direction indicated by the arrow F1, the upper plates being raised from the lower ones in length A and closed down on them in length B.

Fig. 2 shows the chain 16 composed of paired plates 20 each pair having a lower plate 21 and an upper plate 22. The lower plates 21 are hinged to each other at 23 crosswise to chain movement the upper surface of each lower plate comprising a circular impression 24 which serves to shape the lower web of water-permeable material like a pocket into which a metered batch of ground coffee will be deposited; a number of holes 25 are bored in the depression 24 in the lower plate 21, directly opposite the aperture 27 in the upper plate, through which holes air is drawn to keep the lower web adhering closely to the lower plate. The upper plates 22, hinged to the lower plates at 26, parallel with the chain, each have a circular opening 27 opposite the impression 24 in the lower plate; the diameter of aperture 27 is suitably larger than that of the impression.

The conveyor chain 16 lies in, and slides along, the bed 30 (see Fig. 3 also) in which a groove 31 is cut and is kept depressurized by conventional means, not shown, so that air is drawn in through the holes 25 in the lower plates 21.

Fig. 3 shows a carrier 40 each end of which is connected by two links 41 to a driven gear 42. On the left a driver gear 43 meshes with a driven gear 42 and, on the right, an intermittent gear 43/A meshes with a similar driven gear 42 at the other end. Diameters of gears 42 are the same as are also, though larger, those of the drive gear 43 and the intermittent gear 43/A. A prime mover, not shown, imparts a continuous rotary movement to gear 43 whose speed may be varied by conventional means. Rotating speeds of the two gears 42 are equal though they rotate in opposite directions. When in operation, the above assembly keeps the carrier 40 moving up and down in relation to the upper horizontal conveyor chain 16. The conveyor advances intermittently due to oscillation of link 41 connected to the left gear 42.

The figure shows that, along the inner perimeter of conveyor 16, a chain 101 is fixed and meshes with sprocket wheel 102 on whose shaft a ratchet wheel 103 is mounted. By means of the two links 104, 105 and the pawl 106 an intermittent rotary movement is imparted to sprocket wheel 102 that draws the conveyor 16.

Carrier 40 is also guided by four guides 44 (two only can be seen in the Figure) that pass through holes in the carrier. The carrier is equipped with a set of tools for forming the coffee packets: means 45 shaped so as to fit into the impression in the lower plates 21 and form a similar impression in the lower web; a duct 6 down which a metered batch of ground coffee falls when the conveyor 16 stops; a presser 47 that flattens and initially compresses the batch of coffee in an impression; a final compacting tool 48 that compacts the already pressed batch of coffee under a force of 5000 N and rotates about its vertical axis when, while rising, the force on the coffee pad is lessened to about 1300 N as will be explained in detail when describing Figs. 4 and 5; a nozzle 49 for sucking in air from the upper surface of the coffee pad and from its adjacent web; a bonding device 50 that shapes the upper web closely round the coffee pad and bonds the adjacent portions of the upper web to those of the lower web; a quality detector 51 which monitors the dimensions of that part of the coffee packet protruding above the lower plate; a severing tool 52 all of whose vertical movements are made simultaneously with those of the carrier 40, and which is associated to a mobile blade 53 that rises up to co-operate with the tool 52 and cuts a tape, this movement being controlled by a packet meter not shown. Fig. 3 further shows a means 1 for holding a roll of water-permeable paper for the lower web and another for paying out the web; a lower water-permeable web 55 is laid on a lower plate by a controlled loop system; a reservoir 4 containing ground coffee; a metering device 5 for discharging a batch of ground coffee into a duct 6; a suction-generating device 56 for drawing in air, through the flexible tube 57 and rigid pipe 58, into the lower intake end of nozzle 49; a means 11 for holding a roll of water-permeable paper for the upper web and a device for paying the web out; a roll of water-permeable paper for the upper web 59 which, by means of a controlled loop system, is laid over a coffee pad formed in a lower plate. Conventional means, not shown, hold the upper plates 22 in a raised position over the lower plates 21 along a length of conveyor as illustrated in the Figure. It will be clear that the means 45, 6, 47 and 48 operate through the opening 27 in the upper plate when it is closed over the lower plate. A brake 61 locks the gear 62 of the conveyor 16 to stop the conveyor when its intermittent motion ceases. This brake is provided to allow the paired plates 20 in the upper horizontal path of the conveyor to close up together, each pair touching the ones adjacent to it, in order to prevent any movement between the paired plates that could affect the paper strips and cause inaccurate packet formation.

Figs. 4 and 5 show the final compacting tool mounted on the vertical shaft 65 coupled to the shaft 66 by a thrust bearing 67 enabling shaft 65 to rotate in relation to shaft 66. The upper end of shaft 66 carries a piston 68 inside a pneumatic cylinder 69 fixed to the carrier 40, not shown, by a holding means 70; cylinder 69 communicates with a source 71 of compressed air through a conduit containing an adjustable pressure reducing valve 72 and a pressure gauge 73; shaft 65 can slide up and down within the bearings 74 fixed to the carrier 40; shaft 65 carries a pinion 76 whose teeth mesh with rack 77; the shaft 78 of rack 77 is connected to a piston 79 inside a pneumatic cylinder 80; at each end the pneumatic cylinder 80 is connected to a duct 81, 82 on which is mounted a distributor valve 83 receiving compressed air from a source not shown. The assembly illustrated in Figs. 4 and 5 operates as follows: when the carrier 40 is raised above the conveyor 16, the piston 68 is against the lowermost part of the cylinder 69 in which pressure is maintained at a certain level; during descent of the carrier 40 towards the conveyor 16, there is a pause when the lower surface of the compactor 48 further presses the coffee pad and, as the carrier 40 continues downwards and the piston 68 rises, pressure in the pneumatic cylinder increases to a force of 5000 N applied to the coffee pad. Maximum pressure in the pneumatic cylinder 69 also depends on the pressure level permanently maintained in the pneumatic cylinder when the piston is fully lowered, such pressure being watched by gauge 73.

Maximum pressure is reached in the pneumatic cylinder 69 when the carrier 40 arrives at its lowest position; the carrier then begins to rise and pressure in the pneumatic cylinder 69 to fall; a conventional device, not shown, comes into operation as the carrier 40 starts to rise in order to supply compressed air to the pneumatic cylinder 80, upstream of piston 79, through pipe 81; compressed air pressure is adapted to impart sufficient force and motion to rack 77, as indicated by arrow F2, so that through pinion 76 a torque moment is applied to shaft 65 and this is initially unable to overcome the resistance set up by a combination of friction between the underside of the compactor and the coffee pad with said force at 5000 N but while the carrier 40 rises, said resistance can be overcome as force falls to about 1300 N. The underside of the compactor then rotates in relation to the surface of the coffee pad thus freeing itself of any coffee particles. While the compactor rotates, piston 79 reaches the end of its stroke at which point a conventional device, not shown, opens the outlet of distributor valve 83 and delivers compressed air to cylinder 80 through conduit 82 downstream of piston 79 allowing the latter to return to its starting position.

Fig. 6 illustrates a reservoir 4 for ground coffee fitted with a photoelectric cell 120 for monitoring the level of the ground coffee 121; when the level of the coffee in reservoir 4 falls below a certain point, the photoelectric cell 120 operates a small grinder, not shown, upstream of reservoir 4, by conventional means, not shown, which grinder works for a predetermined time to grind an adequate quantity of coffee. Conventional means, not shown, operate the volumetric metering device 5 whenever the conveyor 16 stops.

Fig. 7 shows the chamber 122 of the metering device 5 comprising an intermittently rotatable wheel 123 with curved blades, and an area 124 defined by an aperture 125 in the chamber, by its two sides 126 and gate 127 adjustable by a micrometric screw 128. When the wheel rotates, as indicated by arrow F3, for a predetermined time, the quantity of coffee passing into duct 6 depends on the position given to gate 127, the micrometric screw enabling very accurate adjustment to be made.

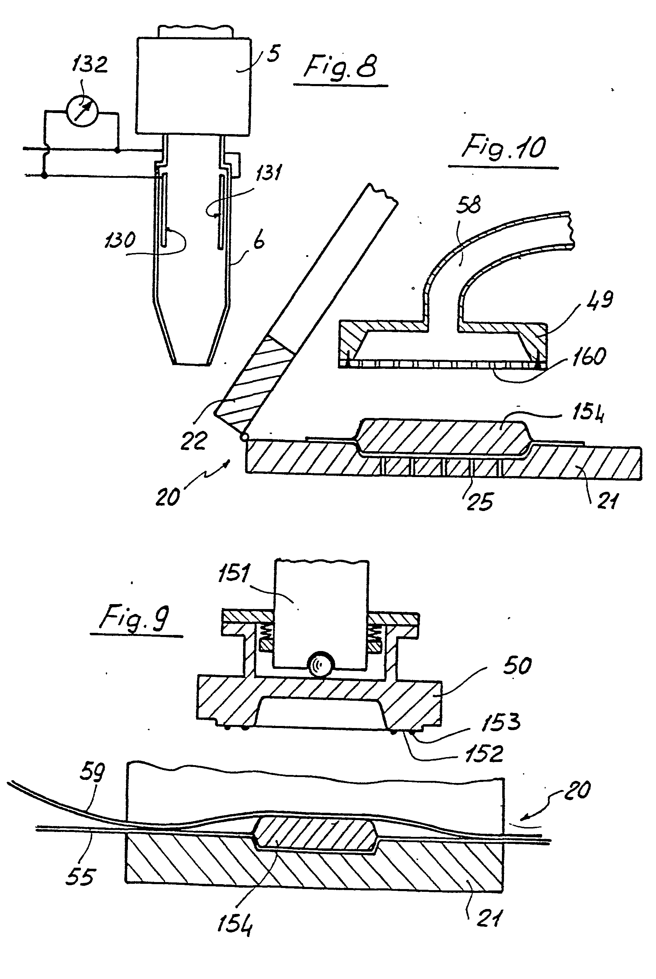

Fig. 8 shows the two electrodes 130, 131 in the duct 6 situated downstream of the metering device 5; these electrodes maintain a potential difference, monitored by voltmeter 132, sufficient to de-ionize the coffee particles inside the duct and prevent them from adhering to its internal surface.

Fig. 9 shows a bonding station 50 associated to shaft 151 by a ball joint. The working surface 152 of the bonding device 50 contains raised portions 153; below the bonding device 50 a pair of plates stand waiting. In the impression in the lower plate 21 a compressed coffee pad 154 has been formed on the lower web 55; the upper web 59 is laid over the coffee pad. The bonding device is lowered to press the upper web onto the coffee pad that protrudes above the lower plate and to bond the upper and lower webs together all round the coffee pad to complete formation of a coffee packet.

Fig. 10 shows a suction nozzle 49 and a pair of plates 20 waiting below the nozzle, in the lower plate of which a coffee packet has been formed in the preceding stations; air is drawn in through conduit 58 so that any loose particles of coffee lying on the coffee packet and on the web adjacent to it are sucked up by the nozzle 49 through the holes 160.

**Claims**

1. Machine for making a double strip enclosing packets of ground coffee for use in automatic coffee-making machines comprising a reservoir (4) for ground coffee; a volumetric batcher (5) dispensing batches of ground coffee; each batch being sufficient for one coffee packet (155); a support (1) for a roll of water-permeable material used to form a lower web (55) and a means (11) holding a roll of water-permeable material used to form an upper strip (59); an endless chain conveyor (16) consisting of pairs (20) of plates (21, 22) adjacent one to another, to which conveyor intermittent movement is imparted, each pair of plates (20) comprising a lower plate (21) in which there is an impression (24) and an upper plate (22) hinged to the lower plate along an edge parallel with conveyor movement, the upper plate having an opening (27) directly over said impression (24); an apparatus for drawing said conveyor; means for raising and suitably lowering an upper plate (22) up from and down onto its lower plate (21); a carrier (40), parallel with a straight portion (A, B) of said conveyor (16), carrying means for forming coffee packets, which carrier is given a reciprocating vertical movement synchronized with the intermittent movement made by the conveyor in order to operate each of the above means at a corresponding station; means for paying out the lower web of water-permeable material; a device for laying the lower web down at a station where a pocket is formed in said web suitable for receiving a batch of coffee to make a coffee packet; a station where a batch of coffee is deposited into said impression; means (47, 48) for pressing a batch of coffee in said impression to form a pad of pressed coffee (154); a device for paying out the upper web of water-permeable material; a device for laying down said upper web at a station where the two webs are bonded round the coffee pad; an apparatus (49) for drawing in air through holes (25) in the impression (24) in the lower plate (21) to keep the lower web (55) adhering to the plates in the path below the stations, the machine being characterized in that it comprises: an endless chain conveyor (16) moving in a vertical plane wherein each lower plate (21) is hinged to its two adjacent plates along the two sides perpendicular to said vertical plane; the carrier (40) driven by two transmission means (41) each connected to an end of the carrier; an initial pressing station (8) comprising a presser (47), mounted on the carrier (40), which exerts initial force on a batch of coffee in the impression (24); a final compactor station (9) for the partly pressed batch of coffee, comprising a tool (48) mounted on the carrier (40), that exerts maximum force when the carrier is in its lowered position to compact the coffee pad, and a means that, starting at the moment when the force applied by the compactor (48) to coffee reaches its maximum, imparts a controlled torque to said compactor about said compactor's longitudinal axis, between the maximum torque as needed to overcome the resistance set up by the friction between the compactor and the coffee at the moment when the force exerted is greatest, and the minimum torque sufficient to rotate the compactor (48) on the coffee pad (154) under a force exerted by said compactor on said coffee pad still able to free the compactor's working surface of loose coffee particles.

2. Machine according to claim 1 characterized in that it comprises a station (10) at which a nozzle (49) associated to the carrier (40) sucks up any loose coffee particles on the upper surface of the coffee pad (154) and on the lower web (55) of water-permeable material; a station (13) where the working surface of a welding plate (50), associated to the carrier (40) for bonding the upper web (59) of water-permeable material to the lower web (55) all round the edge of a coffee pad (154), has raised portions (153) opposite the area adjacent to the coffee pad (154) to increase its bonding effect, and is mounted on the carrier (40) by a ball joint; a station (14) where a quality detector (51) associated to the carrier (40) detects possible inaccuracies in the upper part of a coffee packet (155) waiting at that station, and where the strip (255) is encoded with information for use in a coffee-making machine or for quality control; a station (15) where the completed strips of packets are cut in lengths established by a predetermined programme, all the lengths of a single lot having the same number of coffee packets in them; a means (61) for locking the transmission wheel (62) carrying the conveyor (16) when said conveyor stops to allow the individual pairs of plates (20) to close up one against another in the work lengths of the conveyor (16).

3. Machine according to claims 1, 2 characterized in that it also comprises a ground coffee reservoir (4) containing a device (120) for automatically monitoring the level of ground coffee (121) through connection to a system, upstream of said reservoir (4), that grinds the coffee; a volumetric batcher (5) for the ground coffee including a micrometric device for adjusting average packet weight within a tolerance of $\pm 1$ g in any one lot of coffee packets; a duct (6) for depositing coffee in an impression, comprising means (130, 131) for deionizing the ground coffee passing down it to remove electrostatic charges and allow the coffee particles to detach themselves from the inner surface of the duct (6) and to fall into said pocket.

**Patentansprüche**

1. Maschine zur Herstellung eines Doppelbandes, welches Packungen gemahlenen Kaffees umschließt, zur Verwendung bei automatischen Kaffee-herstellenden Maschinen, welche aufweist: einen Vorratsbehälter (4) für gemahlenen Kaffee; einen volumetrischen Portionierer (5), welcher Portionen gemahlenen Kaffees ausgibt, wobei jede Portion für eine Kaffeepackung (155) ausreicht; einen Träger (1) für eine Rolle wasserdurchlässigen Materials, welches zur Bildung einer unteren Gewebebahn (55) verwendet wird, und eine Einrichtung (11), welche eine Rolle wasserdurchlässigen Materials trägt, welches zur Bildung eines oberen Streifens (59) verwendet wird: einen Endloskettenförderer (16), welcher aus Paaren (20) von aneinanderliegenden Platten (21, 22) besteht, welchem Förderer eine aussetzende Bewegung erteilt wird, wobei jedes Paar von Platten (20) eine untere Platte (21), in welcher eine Einprägung (24) vorhanden ist, und eine obere Platte (22) aufweist, welche mit der unteren Platte entlang einer zur Förderbewegung parallelen Kante gelenkig verbunden ist, wobei die obere Platte eine Ausnehmung (27) direkt über besagter Einprägung (24) aufweist; eine Vorrichtung zum Ziehen besagten Förderers; eine Einrichtung zum Anheben und geeigneten Absenken einer oberen Platte (22) von und zu ihrer unteren Platte (21); parallel zu einem geraden Abschnitt (A, B) besagten Förderers (16) einen Träger (40), welcher eine Vorrichtung zur Bildung von Kaffeepackungen trägt, welchem Träger eine vertikale Hin- und Herbewegung synchron mit der aussetzenden Bewegung, welche durch den Förderer entlang ausgeführt wird, verliehen ist, um jede der oben genannten Einrichtungen an einer korrespondierenden Station zu betätigen; Mittel für die Ausgabe des unteren Gewebebandes aus wasserdurchlässigem Material; eine Vorrichtung zum Auflegen des unteren Gewebebandes bei einer Station, wo eine Tasche in besagtem Gewebeband gebildet wird, die geeignet ist, um eine Portion Kaffees zur Bildung einer Kaffeepackung aufzunehmen; eine Station, an der eine Portion Kaffee in besagte Einprägung abgegeben wird; Mittel (47, 48), um eine Portion Kaffees in besagter Einprägung zur Bildung eines Kissens von gepreßtem Kaffee (154) zu pressen; eine Vorrichtung zur Ausgabe des oberen Gewebebandes aus wasserdurchlässigem Material; eine Vorrichtung zum Auflegen besagten oberen Gewebebandes an einer Station, wo die zwei Gewebebänder um das Kaffeekissen herum befestigt werden; eine Vorrichtung (49), um durch Löcher (25) in der Einprägung (24) in der unteren Platte (21) Luft einzuziehen, um das untere Gewebeband (55) auf dem Weg jenseits der Stationen an die Platten haftend zu halten, wobei die Maschine gekennzeichnet ist dadurch, daß sie aufweist: einen sich in einer Vertikalebene bewegenden Endloskettenförderer (16), bei dem jede untere Platte (21) mit ihren zwei Nachbarplatten entlang der zwei zu besagter Vertikalebene rechtwinkeligen Seiten gelenkig verbunden ist, den Träger (40), der durch zwei Transmissionseinrichtungen (41) angetrieben wird, wobei jede mit einem Ende des Trägers verbunden ist; eine am Anfang stehende, an dem Träger (40) befestigte Preßstation (8), die einen Presser (47) aufweist, welcher eine Anfangskraft auf eine Portion Kaffee in der Einprägung (24) ausübt; eine am Ende stehende Verdichter-Station (9) für die teilweise gepreßte Kaffeeportion, welche ein am Träger (40) befestigtes Werkzeug (48) aufweist, welches eine Maximalkraft ausübt, wenn sich der Träger in seiner abgesenkten Position befindet, um das Kaffeekissen zu verdichten, und eine Vorrichtung, welche, startend in dem Moment, wenn die Kraft, die durch den Verdichter (48) auf den Kaffee aufgebracht wird, ihr Maximum erreicht, dem besagten Verdichter über die Längsachse besagten Verdichters ein gesteuertes Drehmoment mitteilt, zwischen dem Maximaldrehmoment, wie es zur Überwindung des Widerstandes notwendig ist, welcher durch die Reibung zwischen dem Verdichter und dem Kaffee im Moment aufgebracht wird, wenn die durch den Verdichter ausgeübte Kraft am größten ist, und dem Minimaldrehmoment, welches ausreichend ist, um den Verdichter (48) auf dem Kaffeekissen (154) unter einer durch besagten Verdichter auf besagtes Kaffeekissen ausgeübten Kraft, noch fähig, um die Arbeitsoberfläche des Verdichters von losen Kaffeepartikeln freizuhalten, in Drehung zu versetzen.

2. Maschine nach Anspruch 1, dadurch gekennzeichnet, daß sie aufweist: eine Station (10), bei welcher eine Düse (49), welche mit dem Träger (40) verbunden ist, alle losen Kaffeepartikel auf der oberen Oberfläche des Kaffeekissens (154) und auf dem unteren Gewebeband (55) aus wasserdurchlässigem Material ansaugt; eine mit dem Träger (40) verbundene Station (13), um das obere Gewebeband (59) aus wasserdurchlässigem Material mit dem unteren Gewebeband (55) rund um die ganze Kante eines Kaffeekissens (154) zu fixieren, an der die Arbeitsoberfläche einer Schweißplatte (50) erhabene Abschnitte (153) gegenüber der Zone, die an das Kaffeekissen (154) anschließt, aufweist, um ihren Bonding-Effekt anzuheben, und am Träger mittels eines Kugelgelenks gelagert ist; eine Station (14), bei der ein Qualitätsdetektor (51), welcher mit dem Träger (40) verbunden ist, mögliche Abweichungen im oberen Teil einer Kaffeepackung (155), welche in dieser Station wartet, aufspürt, und bei der der Streifen (255) mit Informationen zur Verwendung in einer Kaffee-herstellenden Maschine oder zur Qualitätskontrolle codiert wird; eine Station (15), bei der die komplettierten Streifen von Packungen in Längen, welche durch ein vorherbestimmtes Programm festgelegt sind, geschnitten werden, wobei alle Längen einer einzigen Serie dieselbe Anzahl von Kaffeepackungen beinhalten; eine Vorrichtung (61) zum Blokkieren des Transmissionsrades (62), welches den Förderer (16) trägt, wenn besagter Förderer anhält, um zu erlauben, daß die einzelnen Plattenpaare (20) in den Arbeitslängen des Förderers (16) gegeneinander aufschließen.

3. Maschine nach den Ansprüchen 1, 2, dadurch gekennzeichnet, daß sie weiters einen Vorratsbehälter (4) für gemahlenen Kaffee, welcher eine Vorrichtung (120) zum automatischen Regeln des Niveaus des gemahlenen Kaffees (121) durch Verbindung mit einem System, stromaufwärts des besagten Vorratsbehälters (4), welches den Kaffee mahlt, enthält; einen volumetrischen Portionierer (5) für den gemahlenen Kaffee, welcher eine mikrometrische Vorrichtung zur Einstellung von Durchschnittsgewicht-Packungen mit einer Toleranz von ±1 g in jeglicher Serie von Kaffeepackungen enthält; eine Leitung (6), welche Einrichtungen (130, 131) aufweist, um den gemahlenen Kaffee, der sich abwärts bewegt, zu dejonisieren, um elektrostatische Ladungen zu entfernen und um zu erlauben, daß die Kaffeepartikel sich selbst von der inneren Oberfläche der Leitung (6) lösen und in besagte Packung fallen, zur Abgabe von Kaffee in eine Einprägung aufweist.

**Revendications**

1. Machine pour fabriquer une double bande qui renferme des paquets de café moulu destinés à être utilisés dans des machines à café automatiques, comprenant un réservoir (4) pour le café moulu, un distributeur volumétrique (5) qui distribue des doses de café moulu, chaque dose étant suffisante pour un paquet de café (155); un support (1) destiné à porter un rouleau de matière perméable à l'eau, qui est utilisé pour former une bande inférieure (55), et un moyen (11) qui tient un rouleau de matière perméable à l'eau utilisée pour former une bande supérieure (59), un transporteur (16) à chaîne sans fin, composé de paires (20) de plaques (21, 22) mutuellement adjacentes, transporteur auquel un mouvement intermittent est imprimé, chaque paire (20) de plaques comprenant une plaque inférieure (21) dans laquelle est formée une empreinte (24) et une plaque supérieure (22) articulée sur la plaque inférieure, le long d'un bord parallèle au mouvement du transporteur, la plaque supérieure présentant une ouverture (27) située directement au-dessus de ladite empreinte (24); un appareil servant à entraîner ledit transporteur; des moyens servant à faire monter et descendre une plaque supérieure (22) de façon appropriée pour l'éloigner de sa plaque inférieure (21) ou l'abaisser sur cette plaque; un coulisseau (40) parallèle à une partie rectiligne (A, B) dudit transporteur (16), et qui porte des moyens destinés à former des paquets de café, lequel coulisseau est animé d'un mouvement vertical alternatif synchronisé avec le mouvement intermittent exécuté par le transporteur, pour actionner chacun des moyens précités dans un poste correspondant; des moyens servant à dévider la bande inférieure de matière perméable à l'eau; un dispositif servant à poser le bande inférieure dans un poste, dans lequel il se forme dans ladite bande une poche appropriée pour recevoir une dose de café apte à former un paquet de café; un poste dans lequel une dose de café est déposée dans ladite empreinte; des moyens (47, 48) servant à comprimer une dose de café dans ladite empreinte pour former un pavé (154) de café comprimé; un dispositif servant à dévider la bande supérieure de matière perméable à l'eau; un dispositif servant à poser ladite bande supérieure dans un poste dans lequel les deux bandes sont assemblées autour du pavé de café; un appareil (49) servant à aspirer de l'air à travers des trous (25) pratiqués dans l'empreinte (24) ménagée dans la plaque inférieure (21), afin de maintenir la bande inférieure (55) appliquée contre les plaques dans le trajet parcouru sous les postes, ladite machine étant caractérisée par le fait qu'elle comprend: un transporteur à chaîne sans fin (16) qui circule dans un plan vertical, dans lequel chaque plaque inférieure (21) est articulée sur les deux plaques qui lui sont adjacentes, le long des deux côtés perpendiculaires audit plan vertical; le coulisseau (40) étant entraîné par deux moyens de transmission (41), dont chacun est relié à une extrémité du chariot; un poste (8) de compression initiale qui comprend un presseur (47) monté sur le coulisseau (40) et qui exerce une force initiale sur une dose de café contenue dans l'empreinte (24); un poste compacteur final (9), destiné à agir sur la dose de café partiellement comprimée, comprenant un outil (48) monté sur le coulisseau (40) et qui exerce une force maximum lorsque le coulisseau se trouve dans sa position abaissée, pour compacter le pavé de café, et un moyen qui, en démarrant au momoent où la force appliquée par le compacteur (48) sur le café atteint son maximum, imprime un couple réglé audit compacteur, autour de l'axe longitudinal de ce compacteur, ce couple variant entre le couple maximum qui est nécessaire pour surmonter la résistance opposée par le frottement entre le compacteur et le café, au moment où la force exercée est la plus grande, et le couple minimum qui est suffisant pour faire tourner le compacteur (48) sur le pavé de café (154) sous une force exercée par ledit compacteur sur ledit pavé de café qui est encore capable de débarrasser la surface travaillante du compacteur des particules de café non adhérentes.

2. Machine selon la revendication 1, caractérisée par le fait qu'elle comprend un poste (10), dans lequel un suceur (49), associé au coulisseau (40), aspire les particules de café non adhérentes situées éventuellement sur la surface supérieure du pavé de café (154) et sur la bande inférieure (55) de matière perméable à l'eau; un poste (13), dans lequel la surface travaillante d'une plaque de soudage (50), associée au coulisseau (40) et destinée à assembler la bande supérieure (59) de matière perméable à l'eau à la bande inférieure (55) sur tout le tour du bord d'un pavé de café (154), présente des parties saillantes (153), face à la région adjacente au pavé de café (154), pour accroître son effet d'assemblage et est montée sur le chariot (40) par un joint à rotule; un poste (14) dans lequel un détecteur de qualité (51), associé au coulisseau (40), détecte les éventuels défauts de précision de la partie supérieure d'un paquet de café (155) en attente à ce poste, et dans lequel la bande (255) est codée avec une information destinée à être utilisée dans une machine à café ou pour le contrôle de la qualité; un poste (15), dans lequel les bandes terminées de paquets sont découpées en longueurs établies par un programme prédéterminé, toutes les longueurs d'un même lot contenant le même nombre de paquets de café; un moyen (61) destiné à bloquer la roue de transmission (62), qui entraîne le transporteur (16), lorsque ce transporteur s'arrête, pour permettre aux paires individuelles de plaques (20) de se fermer l'une contre l'autre dans les longueurs travaillantes du transporteur (16).

3. Machine selon les revendications 1, 2, caractérisée par le fait qu'elle comprend un réservoir de café moulu (4), qui contient un dispositif (120) destiné à surveiller automatiquement le niveau du café moulu (121) par liaison avec un système situé en amont dudit réservoir (4), qui mout le café; un distributeur volumétrique (5) pour le café moulu, comprenant un dispositif micrométrique permettant d'ajuster le poids moyen des paquets dans des limites de tolérances de $\pm 1$ g dans un quelconque des lots de paquets de café; un conduit (6) destiné à déposer du café dans l'empreinte et qui comprend des moyens (130, 131), destinés à désioniser le café moulu qui descend dans ce conduit, pour éliminer les charges électrostatiques et permettre aux particules de café de se détacher de la surface interne du conduit (6) et de tomber dans ladite poche.

Fig.1

EP 0 144 623 B1

Fig 2

Fig.3

EP 0 144 623 B1

Fig.4

Fig. 6

Fig. 5

Fig.7

*Fig.8*

*Fig.10*

*Fig.9*